# NEUE EUROPÄISCHE PATENTSCHRIFT

(11) **EP 1 747 920 B2**
(45) Veröffentlichungstag und Bekanntmachung des Hinweises auf die Entscheidung über den Einspruch: **11.07.2018**
(45) Hinweis auf die Patenterteilung: 03.09.2008
(21) Anmeldenummer: 05291602.0
(22) Anmeldetag: 26.07.2005
(51) Int. Cl.: B60H 1/22

(54) **Heizungsanordnung mit PCT-Element, insbesondere für ein Kraftfahrzeug**
Vehicle Heater with PTC-Element
Générateur de chaleur à coefficient de température positif (CTP) pour véhicule

(43) Veröffentlichungstag der Anmeldung: 31.01.2007
(73) Patentinhaber: Mahle Behr France Rouffach S.A.S., 68250 Rouffach (FR)
(72) Erfinder: Brun, Michel, 68740 Rustenhart (FR); Denny, Geoffrey, 68100 Mulhouse (FR); Eckerlen, Gerard, 68250 Rouffach (FR); Gogmos, Erwan, 68000 Colmar (FR); Miss, Pascal, 67600 Sélestat (FR); Mougey, Mathieu, 68190 Ensisheim (FR); Robin, Nicolas, 67000 Strasbourg (FR); Schmittheisler, Christophe, 67680 Epfig (FR); Weingaertner, Stéphane, 68250 Pfaffenheim (FR)
(74) Vertreter: Grauel, Andreas

(56) Entgegenhaltungen:
- EP-A- 0 719 664
- EP-A2- 0 937 595
- DE-A1- 4 238 364
- DE-A1- 10 141 146
- DE-A1- 10 234 470
- DE-A1- 19 738 318
- DE-A1- 19 925 757
- DE-A1- 19 957 452
- DE-C2- 10 102 671
- US-A1- 2004 084 431
- US-A1- 2005 061 798
- US-B1- 6 285 004
- WOLFHARD L.: 'CAN Controller Area Network; Grundlagen und Praxis', Bd. 2. AUFL., 1994, HÜTHIG VERLAG, HEIDELBERG Seiten 76 - 81
- ETSCHBERGER K. ET AL: 'CAN Controller-Area-Network; Grundlagen, Protokolle, Bausteine, Anwendungen', Bd. TEI 1, 1994, CARL HANSER VERLAG, MÜNCHEN Seiten 12 - 17
- DAIS S. ET AL: 'Technisches Konzept des seriellen Bus-systems CAN- Teil 1' ATZ AUTOMOBILTECHNISCHE ZEITSCHRIFT Bd. 94, Nr. 2, 1992, Seiten 66 - 77

## Beschreibung

Die Erfindung betrifft eine Heizungsanordnung mit einem PTC-Element, insbesondere für ein Kraftfahrzeug, gemäß dem Oberbegriff des Anspruchs **1.**

Aus der US 6 285 004 ist eine Heizungsanordnung, die der Oberbegriff des Anspruchs 1 offenbart.

Aus der DE 102 34 470 A1 ist eine elektrische Heizung bekannt, die eine elektrische Heizeinrichtung, insbesondere eine PTC-Heizeinrichtung, und eine daran angeordnete elektrische Steuereinrichtung zum Steuern des der Heizeinrichtung gelieferten Heizstromes umfasst. Um die in der elektronischen Steuereinrichtung erzeugte Verlustwärme abzuführen, sind an der Steuereinrichtung Kühleinrichtungen vorgesehen, die im Strom der zu erwärmenden Luft angeordnet sind. Die elektronische Steuerung für den Heizstrom ist in einem Gehäuse untergebracht, wobei am Gehäuse Kühleinrichtungen in Form von Kühllamellen oder Kühlrippen vorgesehen sind, die von einem Rippengrund ausgehen. Die Steuereinrichtung und die Heizeinrichtung sind quer zum Strom der zu erwärmenden Luft in Abstand voneinander angeordnet und die Kühllamellen befinden sich im Zwischenraum der Steuereinrichtung und der Heizeinrichtung.

Die DE 101 02 671 C2 offenbart eine elektrische Heizung für ein Kraftfahrzeug mit einem oder mehreren Heizelementen, eine Steuerschaltung zum Steuern der von den Heizelementen abgegebenen Leistung, wobei die Steuerschaltung einen oder mehrere Leistungshalbleiter umfasst, welche auf einer Schaltungsträgerplatte angeordnet sind. Die Schaltungsträgerplatte ist auf ihrer den Leistungshalbleitern abgewandten Seite (Unterseite) stoffschlüssig mit einer Metallplatte verbunden, welche dazu vorgesehen ist, auf Massepotential zu liegen. Die Metallplatte ist gegenüber Leiterbahnen, welche sich auf der Unterseite der Schaltungsträgerplatte befinden und dazu vorgesehen sind, gegenüber dem Massepotential eine Spannung zu führen, elektrisch isoliert. Die Steuerschaltung ist in einem Gehäuse angeordnet, wobei außerhalb des Gehäuses ein oder mehrere Kühlkörper vorgesehen sind und eine wärmeleitende Verbindung die im Gehäuse angeordnete metallische Platte und die Kühlkörper verbindet.

Anordnungen, bei denen elektrische Heizeinrichtungen vorgesehen sind, welche auch eine Kühlung der Steuereinrichtung für die Steuerung der Heizelemente vorsehen, sind ferner aus der DE 199 57 452 A1, der DE 199 25 757 A1 und der DE 197 38 318 A1 bekannt.

Es ist Aufgabe der Erfindung, eine verbesserte Heizungsanordnung mit PTC-Element zur Verfügung zu stellen.

Diese Aufgabe wird gelöst durch eine Heizungsanordnung mit den Merkmalen des Anspruchs 1. Vorteilhafte Ausgestaltungen sind Gegenstand der Unteransprüche.

Vorzugsweise ist eine Heizungsanordnung, insbesondere für ein Kraftfahrzeug, vorgesehen, mit mindestens einem PTC-Element und einem Gehäuse, in welchem das PTC-Element angeordnet ist und durch welches die zu erwärmende Luft strömt, und mit einer Heizsteuereinrichtung, die zumindest teilweise im Gehäuse angeordnet ist und die mindestens einen Kühlkörper aufweist, bei der die Heizsteuereinrichtung mit wenigstens einer Zusatzgerätsteuereinrichtung kombiniert und als Einheit ausgebildet ist. Dadurch, dass die Heizsteuereinrichtung mit der Zusatzgerätsteuereinrichtung kombiniert ist, kann die Anzahl der einzelnen Steuereinrichtungen verringert werden. Bevorzugt ist - neben dem oder den Kühlkörpern für die Heizsteuereinrichtung - mindestens ein Kühlkörper für die Zusatzgerätsteuereinrichtung vorgesehen, jedoch können auch gemeinsame Kühlkörper vorgesehen sein.

Vorzugsweise handelt es sich bei wenigstens einer Zusatzgerätsteuereinrichtung um eine Gebläsesteuereinrichtung. Es ist aber auch an andere Zusatzgeräte zu denken, insbesondere an solche, die mit Klimaanlagen und/oder Luftverteilfunktionen in Zusammenhang stehen, wie beispielsweise Verteilklappen, Luftausströmer usw..

Für die Steuerung für die Heizung und die Steuerung(en) für das/die Zusatzgerät(e) ist vorzugsweise ein gemeinsames Datenbussystem vorgesehen. Hierbei handelt es sich vorzugsweise um ein CAN (Controller Area Network) oder LIN (Local Interconnect Network) Bussystem. Das Datenbussystem ist bevorzugt ebenfalls im Gehäuse angeordnet, so dass kurze Wege für die Signal- und Datenübertragung vorliegen.

Die Heizsteuereinrichtung ist vorzugsweise direkt mit dem PTC-Element verbunden, so dass eine zusätzliche Verkabelung entfallen kann, wodurch sich die Montage vereinfacht und die Herstellungskosten reduziert werden können.

Vorteilhafterweise ragt zumindest ein Kühlkörper der Heizsteuereinrichtung und/oder der Zusatzgerätsteuereinrichtung(en) in den Luftkanal für die zu erwärmende Luft, ist vorzugsweise im Luftstrom der zu erwärmenden Luft angeordnet, und ist besonders vorzugsweise - in Luftströmungsrichtung gesehen - vor dem PTC-Element angeordnet. In diesem Bereich ist die zu erwärmende Luft noch kalt, d.h. die Kühlleistung ist am besten und die Elektronik kann vor Überhitzung geschützt werden.

Vorzugsweise ist mindestens eine Schnittstelle für mindestens eine Sensoreinrichtung, vorzugsweise für einen Temperaturfühler vorgesehen. Der Temperaturfühler ist vorzugsweise in der Umgebung des Zuheizers, d.h. der PTC-Elemente, angeordnet. Es kann jedoch auch keine Sensorschnittstelle/Temperaturfühlerschnittstelle vorgesehen sein, so dass die sensorische Überwachung/Temperaturüberwachung entfällt oder auf andere Weise erfolgt.

Vorzugsweise ist mindestens eine Busschnittstelle vorgesehen, über welche die Heiz- und Zusatzgerätsteuereinrichtungen Informationen vom Bediengerät und Fahrzeug zu bekommen, wie bspw. gewünschte Temperatur, gewünschte Gebläsestärke, zur Verfügung stehende elektrische Leistung, so dass eine Ansteuerung des Zuheizers und des Zusatzgeräts, wie des Gebläses möglich ist. Die Busschnittstelle kann auch dazu verwendet werden, die registrierten Sensordaten an andere Stellen zu übermitteln.

Die Heizungsanordnung umfasst vorzugsweise mehrere PTC-Elemente, die einzeln und/oder in Gruppen von mindestens zwei PTC-Elementen regelbar sind. Dies ermöglicht eine möglichst bedarfsgerechte Regelung der Temperatur. Ferner kann im Falle eines Defekts in einem Heizstrang dieser ausgeschaltet werden, so dass nicht notwendigerweise die gesamte Heizungsanordnung sofort ausgetauscht werden muss, sondern ein Heizen mit Hilfe der verbleibenden Heizstränge weiterhin möglich ist.

Die Heizsteuereinrichtung und die Zusatzgerätsteuereinrichtung sind vorzugsweise in eine Gehäusewand integriert ausgebildet oder bilden einen Teil der Gehäusewand, wobei zumindest die mit der Leistungselektronik verbundenen Kühlkörper auf der Gehäuseinnenseite, also im Bereich des zu erwärmenden Luftstroms, angeordnet sind. Eine derartige Ausgestaltung ermöglicht eine bauraumsparende Ausgestaltung. Ferner kann der Verkabelungsaufwand minimiert werden.

Vorteilhafterweise können zur Verbesserung der Wärmeabfuhr in unmittelbarer Nähe der PTC-Elemente Wellrippen vorgesehen werden. Das ist ggf. auch in Zusammenhang mit den Kühlkörpern möglich.

Die Heizungsanordnung weist vorzugsweise mindestens ein PTC-Element mit einer Betriebstemperatur von 80°C bis 120°C auf, so dass das Risiko einer Überhitzung, auch im Bereich der Leistungselektronik, minimiert werden kann.

Vorzugsweise ist die Heizungsanordnung als dezentraler Zuheizer außerhalb des Klimagerätes beispielsweise in entsprechenden Luftkanälen in der A-Säule, B-Säule, C-Säule oder in einer Tür angeordnet, jedoch ist ebenfalls eine Anordnung im Klimagerät möglich.

Im Folgenden wird die Erfindung anhand zweier Ausführungsbeispiele unter Bezugnahme auf die Zeichnung im Einzelnen erläutert. In der Zeichnung zeigen:
- Fig. 1: eine stark schematisierte ausschnittsweise Ansicht auf ein erstes Ausführungsbeispiel einer erfindungsgemäßen Heizungsanordnung im Bereich der Heizsteuereinrichtung, und
- Fig. 2: eine stark schematisierte Draufsicht auf die Heizungsanordnung von Fig. 1 im Bereich der Heizsteuereinrichtung.

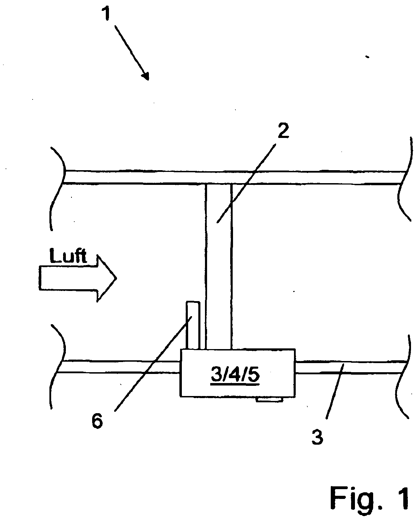

Bei einer PTC-Heizungsanordnung 1 mit mehreren PTC-Elementen und damit verbundenen Wellrippen, in Fig. 1 schematisiert dargestellt und mit dem Bezugszeichen 2 bezeichnet, sind die PTC-Elemente vorliegend jeweils zwischen zwei Kontaktblechen eingeklebt, vorliegend mittels eines Zwei-Komponenten-Silikon-Klebstoffes, und auf der Außenseite sind Wellrippen angeordnet, um die wärmeübertragende Fläche zu vergrößern, welche ebenfalls mittels eines Zwei-Komponenten-Silikon-Klebstoffes angeklebt sind. Die Mehrzahl von PTC-Elementen mit Kontaktblechen und Wellrippen bildet ein Zuheizernetz, im Folgenden auch als Zuheizer bezeichnet.

Die Steuereinrichtung für die PTC-Elemente, die im Folgenden als Heizsteuereinrichtung 3 bezeichnet ist, ist vorliegend im Wesentlichen ausgebildet, wie in der DE 197 38 318 A1 offenbart. Dabei weist die Heizsteuereinrichtung 3 eine Ansteuerlogik (vorliegend eine PWM (Pulse Width Modulation) Ansteuerung) und eine Leistungselektronik auf. Über die einzelnen elektronischen Schalter der Leistungselektronik sind die PTC-Elemente oder PTC-Elementegruppen separat schaltbar. Bevorzugt ist jedem PTC-Element oder jeder PTC-Elementegruppe ein elektronischer Schalter, vorliegend jeweils ein Transistor, zugeordnet. Die Ansteuerlogik, die einen Algorithmus zur Ansteuerung der einzelnen PTC-Elemente oder PTC-Elementegruppen beinhaltet, kann in die Heizsteuereinrichtung 3 integriert sein, so dass Ansteuerlogik und Leistungselektronik eine Einheit bilden, wie in der Zeichnung dargestellt.

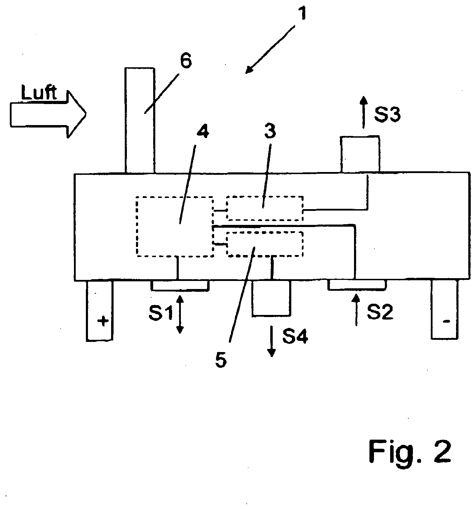

Alle für die Steuerung der Heizleistung benötigten Signaleingänge werden vorliegend über ein Datenbussystem 4, beispielsweise eine Feldbusschnittstelle wie insbesondere CAN oder LIN, zugeführt. Auch können ggf. Sensordaten über den Datenbus gesendet werden. Selbstverständlich ist die Zuführung über eine beliebige analoge bzw. digitale Schnittstelle, wie bspw. eine serielle Schnittstelle möglich. Als Signaleingänge für das Datenbussystem 4 sind vorliegend eine Busschnittstelle S1, die auch als Ausgang dient, und ein Eingang S2 von einem Temperaturfühler (nicht dargestellt) vorgesehen. Die Schnittstellen für die Heizsteuerung und die Gebläsesteuerung sind in Fig. 2 mit S3 bzw. S4 bezeichnet.

Im Unterschied zur DE 197 38 318 A1 ist neben der Heizsteuereinrichtung 3 auch eine Steuereinrichtung für das Gebläse, im Folgenden als Gebläsesteuereinrichtung 5 bezeichnet, vorgesehen, die benachbart zur Heizsteuereinrichtung 3 angeordnet ist, wobei die Regelung über das gleiche Datenbussystem 4 erfolgt.

Um die durch die elektronischen Bauteile, insbesondere die Leistungselektronik, anfallende Wärme abzuführen, sind sowohl an der Heizsteuereinrichtung 3 als auch der Gebläsesteuereinrichtung 5 Kühlkörper 6 angeordnet, welche in den zu erwärmenden Luftstrom ragen, wobei sie in normaler Luftströmungsrichtung gesehen vor den PTC-Elementen und Wellrippen angeordnet sind. Die Kühlkörper 6 bestehen aus einem gut wärmeleitfähigen Material, insbesondere aus Metall und sind möglichst an oder benachbart zu den wärmeabgebenden Bauteilen angeordnet.

Die gesamte Anordnung, d.h. Datenbussystem 4, Heizsteuereinrichtung 3 und Gebläsesteuereinrichtung 5 samt Kühlkörpern 6, PTC-Elemente und Wellrippen, ist in einem Kunststoff-Gehäuse 7 angeordnet und bildet insgesamt die PTC-Heizungsanordnung 1. Hierbei sind das Datenbussystem 4, die Heizsteuereinrichtung 3 und die Gebläsesteuereinrichtung 5 in die Gehäusewand integriert ausgebildet, wobei eine integrierte Stromversorgung, in Fig. 2 durch + und - gekennzeichnet, vorgesehen ist. Die elektrische Kontaktierung erfolgt vorliegend über Stecker, jedoch ist auch ein Anlöten von Kabeln oder eine beliebige andere elektrische Kontaktierung möglich.

Vorliegend ist die Heizungsanordnung 1 als dezentrale zusätzliche Heizung außerhalb des Klimagerätes in einen in der A-Säule verlaufenden Luftkanal integriert.

Als Maßnahme zum Schutz einer Überhitzung sind gemäß einem zweiten, nicht in der Zeichnung dargestellten Ausführungsbeispiel PTC-Elemente gewählt, die eine Betriebstemperatur von zwischen 80°C und 120°C haben, im Gegensatz zu den gemäß dem ersten Ausführungsbeispiel verwendeten, herkömmlichen PTC-Elementen mit einer Oberflächentemperatur von 130°C bis 165°C. Ansonsten entspricht der Aufbau dem des ersten Ausführungsbeispiels.

Ein entsprechender Schutz kann auch durch die Verwendung eines Reglers erreicht werden, der bei Erreichen einer bestimmten Temperatur in der Umgebung der Heizungsanordnung die Leistung reduziert oder zeitweise die Stromversorgung ganz abschaltet.

## Patentansprüche

1. Heizungsanordnung, insbesondere für ein Kraftfahrzeug, mit mindestens einem PTC-Element und einem Gehäuse (7), in welchem das PTC-Element angeordnet ist und durch welches die zu erwärmende Luft strömt, und mit einer Heizsteuereinrichtung (3), die zumindest teilweise im Gehäuse (7) angeordnet ist und die mindestens einen Kühlkörper (6) aufweist, wobei die Heizsteuereinrichtung (3) mit wenigstens einer Zusatzgerätsteuereinrichtung (5) kombiniert und als Einheit ausgebildet ist, **dadurch gekennzeichnet, dass** für die Steuerung für die Heizung und die Steuerung für das Zusatzgerät/die Zusatzgeräte ein gemeinsames Datenbussystem (4) vorgesehen ist, wobei das Datenbussystem (4) im Gehäuse (7) angeordnet ist, wobei der Kühlkörper (6) im Luftstrom der zu erwärmenden Luft angeordnet ist und in Luftströmungsrichtung vor dem PTC-Element angeordnet ist.

2. Heizungsanordnung nach Anspruch 1, **dadurch gekennzeichnet, dass** wenigstens eine Zusatzgerätsteuereinrichtung (5) eine Gebläsesteuereinrichtung ist.

3. Heizungsanordnung nach einem der vorhergehenden Ansprüche, **dadurch gekennzeichnet, dass** die Heizsteuereinrichtung (3) direkt mit dem PTC-Element verbunden ist.

4. Heizungsanordnung nach einem der vorhergehenden Ansprüche, **dadurch gekennzeichnet, dass** mindestens eine Schnittstelle (S2) für mindestens eine Sensoreinrichtung, insbesondere für einen Temperaturfühler vorgesehen ist.

5. Heizungsanordnung nach einem der vorhergehenden Ansprüche, **dadurch gekennzeichnet, dass** mindestens eine Busschnittstelle (S1) vorgesehen ist.

6. Heizungsanordnung nach einem der vorhergehenden Ansprüche, **dadurch gekennzeichnet, dass** mehrere PTC-Elemente vorgesehen sind, die einzeln und/oder in Gruppen von mindestens zwei PTC-Elementen regelbar sind.

7. Heizungsanordnung nach einem der vorhergehenden Ansprüche, **dadurch gekennzeichnet, dass** die Heizsteuereinrichtung (3) und die Zusatzsteuereinrichtung (5) in eine Gehäusewand integriert ausgebildet sind oder einen Teil der Gehäusewand bilden, wobei zumindest die mit der Leistungselektronik der Heizsteuereinrichtung (3) und der Zusatzsteuereinrichtung (5) verbundenen Kühlkörper (7) auf der Gehäuseinnenseite angeordnet sind.

8. Heizungsanordnung nach einem der vorhergehenden Ansprüche, **dadurch gekennzeichnet, dass** Wellrippen benachbart zum PTC-Element vorgesehen sind.

9. Heizungsanordnung nach einem der vorherigen Ansprüche, **dadurch gekennzeichnet, dass** die Heizungsanordnung (1) mindestens ein PTC-Element mit einer Betriebstemperatur von 80°C bis 120°C aufweist.

## Claims

1. A heating system, in particular for a motor vehicle, with at least one PTC element and a housing (7) in which the PTC element is arranged and through which the air to be heated flows, and with a heater control device (3) which is at least partially arranged in the housing (7) and comprises at least one heat sink (6), wherein the heater control device (3) is combined with at least one accessory equipment control device (5) and embodied as a unit, **characterised in that** a joint data bus system (4) is provided for the control of the heater and for the control of the accessory equipment, wherein the data bus system (4) is arranged in the housing (7), wherein the heat sink (6) is arranged in the airflow of the air to be heated and upstream of the PTC element in the airflow direction.

2. The heating system according to claim 1, **characterised in that** at least one accessory equipment control device (5) is a blower control device.

3. The heating system according to one of the preceding claims, **characterised in that** the heater control device (3) is directly connected to the PTC element.

4. The heating system according to one of the preceding claims, **characterised in that** at least one interface (S2) is provided for at least one sensor device, in particular for a temperature sensor.

5. The heating system according to one of the preceding claims, **characterised in that** at least one bus interface (S1) is provided.

6. The heating system according to one of the preceding claims, **characterised in that** a plurality of PTC elements which can be controlled individually and/or in groups of at least two PTC elements is provided.

7. The heating system according to one of the preceding claims, **characterised in that** the heater control device (3) and the accessory equipment control device (5) are integrated into a housing wall or form a part of the housing wall, wherein at least the heat sinks (7) connected to the power electronics of the heater control device (3) and the accessory equipment control device (5) are arranged on the inner side of the housing.

8. The heating system according to one of the preceding claims, **characterised in that** corrugated fins are provided adjacent to the PTC element.

9. The heating system according to one of the preceding claims, **characterised in that** the heating system (1) has at least one PTC element with an operating temperature of 80°C to 120°C.

## Revendications

1. Système de chauffage, en particulier pour un véhicule automobile, comprenant au moins un élément à coefficient de température positif (CTP) et un carter (7) dans lequel est disposé l'élément à coefficient de température positif (CTP) et à travers lequel circule l'air à réchauffer, et comprenant un dispositif de commande de chauffage (3) qui est disposé au moins partiellement dans le carter (7) et qui présente au moins un refroidisseur (6), où le dispositif de commande de chauffage (3) est combiné à au moins un dispositif de commande d'appareil auxiliaire (5) et conçu comme un ensemble unitaire, **caractérisé en ce qu'**il est prévu un système de bus de données commun (4) pour la commande concernant le chauffage et pour la commande concernant l'appareil auxiliaire / les appareils auxiliaires, où le système de bus de données (4) est disposé dans le carter (7), où le refroidisseur (6) est disposé dans le flux d'air de l'air à réchauffer et est disposé en amont de l'élément à coefficient de température positif (CTP), dans la direction d'écoulement de l'air.

2. Système de chauffage selon la revendication 1, **caractérisé en ce qu'**au moins un dispositif de commande d'appareil auxiliaire (5) est un dispositif de commande de ventilateur.

3. Système de chauffage selon l'une ou l'autre des revendications précédentes, **caractérisé en ce que** le dispositif de commande de chauffage (3) est directement relié à l'élément à coefficient de température positif (CTP).

4. Système de chauffage selon l'une quelconque des revendications précédentes, **caractérisé en ce qu'**il est prévu au moins une interface (S2) pour au moins un dispositif à capteurs, en particulier pour un capteur de température.

5. Système de chauffage selon l'une quelconque des revendications précédentes, **caractérisé en ce qu'**il est prévu au moins une interface de bus (S1).

6. Système de chauffage selon l'une quelconque des revendications précédentes, **caractérisé en ce qu'**il est prévu plusieurs éléments à coefficient de température positif (CTP) qui sont réglables individuellement et / ou en groupes d'au moins deux éléments à coefficient de température positif (CTP).

7. Système de chauffage selon l'une quelconque des revendications précédentes, **caractérisé en ce que** le dispositif de commande de chauffage (3) et le dispositif de commande d'appareil auxiliaire (5) sont configurés en étant intégrés dans une paroi du carter, ou bien forment une partie de la paroi du carter, où au moins les refroidisseurs (7) reliés à l'électronique de puissance du dispositif de commande de chauffage (3) et du dispositif de commande d'appareil auxiliaire (5) sont disposés sur le côté intérieur du carter.

8. Système de chauffage selon l'une quelconque des revendications précédentes, **caractérisé en ce que** des ailettes ondulées sont prévues à proximité de l'élément à coefficient de température positif (CTP).

9. Système de chauffage selon l'une quelconque des revendications précédentes, **caractérisé en ce que** le système de chauffage (1) présente au moins un élément à coefficient de température positif (CTP) ayant une température de fonctionnement comprise entre 80°C et 120°C.
